# EUROPEAN PATENT APPLICATION

(11) **EP 4 247 073 A1**
(43) Date of publication of application: **20.09.2023**
(21) Application number: 21905804.7
(22) Date of filing: 16.12.2021
(51) Int. Cl.: H04W 68/02

(54) **BUSY INDICATION TRANSMISSION METHOD AND APPARATUS**

(30) Priority: 16.12.2020 CN 202011493562
(71) Applicant: Vivo Mobile Communication Co., Ltd., Dongguan, Guangdong 523863 (CN)
(72) Inventor: PU, Wenjuan, Dongguan, Guangdong 523863 (CN); TSAI, Zong-Ying, Dongguan, Guangdong 523863 (CN)
(74) Representative: Murgitroyd & Company
(86) International application number: PCT/CN2021/138933
(87) International publication number: WO 2022/127878

(57) **Abstract**

This application discloses a busy indication transmission method and apparatus, and belongs to the field of wireless communication technologies. The busy indication transmission method includes: after listening to a paging message, a terminal determines whether to send a busy indication to a network side; and if determining to send the busy indication to the network side, sends the busy indication to the network side.

## Description

### CROSS-REFERENCE TO RELATED APPLICATION

This application claims priority to Chinese Patent Application No. 202011493562.6 filed on December 16, 2020, which is incorporated herein by reference in its entirety.

### TECHNICAL FIELD

This application belongs to the field of wireless communication technologies, and specifically relates to a busy indication transmission method and apparatus.

### BACKGROUND

Currently, there is not only a single-card terminal, but also a dual-card or multi-card terminal. The dual-card or multi-card terminal is collectively referred to as a multi-card terminal. Multiple cards may come from a same operator or different operators, may be physical cards, or may be virtual cards, such as embedded-SIMs (Embedded-SIM, eSIM). A capability of a multi-card terminal may be single-transmission single-reception, single-transmission double-reception, double-transmission double-reception, or the like. A feature of the multi-card terminal is that the multi-card terminal may camp on multiple networks. However, implementations of the multi-card terminal are different. Some multi-card terminals may perform transmission and reception on multiple networks at the same time, which does not affect each other. Some multi-card terminals may camp on multiple networks but may camp on multiple networks in a time-division manner. For example, the multi-card terminal camps on a network A and monitors paging (paging) of the network A for a period of time, and switches to camp on a network B and monitors paging of the network B for another period of time. Alternatively, the multi-card terminal receives or sends data in a connected state on the network A for a period of time, and needs to receive paging on the network B for another period of time. Alternatively, the multi-card terminal receives or sends data on the network A in a connected state for a period of time, and needs to establish a connection to receive or send data on the network B for another period of time.

In Rel-17 or a later release, an air interface paging message sent by a network may carry a paging cause (paging cause), which is used to indicate a cause of paging a UE by the network. For example, the network pages the UE because voice over new radio (Voice over New Radio, VoNR) (that is, a voice call) arrives. The UE may determine a subsequent behavior according to the paging cause carried in the paging message received from the air interface. For example, the terminal is a dual-card terminal, and a card 1 is playing a game. If a card 2 receives a paging message, and a corresponding paging cause is VoNR, the terminal may choose to initiate radio resource control (Radio Resource Control, RRC) connection establishment or RRC connection resume to an RRC connected state on the card 2 to send or receive corresponding data. In another example, the card 1 is in a voice call. If the card 2 receives a paging message, and a corresponding paging cause is a short message service, the multi-card terminal may choose not to process a service of the card 2. In this case, a network of the card 2 may not know that the UE chooses not to process the service of the card 2, and continues to page the UE, thereby causing a waste of network resources.

### SUMMARY

An objective of embodiments of this application is to provide a busy indication transmission method and apparatus, so as to resolve a problem that a network side continues to page a terminal when the terminal chooses not to process a service that triggers current paging, thereby causing a waste of network resources.

To resolve the foregoing technical problem, this application is implemented as follows:

According to a first aspect, a busy indication transmission method is provided, where the method is performed by a terminal, and the method includes:
determining whether to send a busy indication to a network side after listening to a paging message; and
if determining to send the busy indication to the network side, sending the busy indication to the network side.

According to a second aspect, a busy indication transmission method is provided, where the method is performed by a network side device, and the method includes:
receiving a busy indication sent by a terminal; and
performing a corresponding operation according to the busy indication.

According to a third aspect, a busy indication transmission apparatus is provided, including:
a determining module, configured to: determine whether to send a busy indication to a network side after listening to a paging message; and
a first sending module, configured to: if determining to send the busy indication to the network side, send the busy indication to the network side.

According to a fourth aspect, a busy indication transmission apparatus is provided, including:
a first receiving module, configured to receive a busy indication sent by a terminal; and
a processing module, configured to perform a corresponding operation according to the busy indication.

According to a fifth aspect, a terminal is provided, where the terminal includes a processor, a memory, and a program or instructions stored in the memory and executable on the processor, where when the program or instructions are executed by the processor, the steps of the method in the first aspect are implemented.

According to a sixth aspect, a network side device is provided, where the network side device includes a processor, a memory, and a program or instructions stored in the memory and executable on the processor, where when the program or instructions are executed by the processor, the steps of the method in the second aspect are implemented.

According to a seventh aspect, a readable storage medium is provided, where a program or instructions are stored in the readable storage medium, and when the program or the instructions are executed by a processor, the steps of the method according to the first aspect or the steps of the method according to the second aspect are implemented.

According to an eighth aspect, a chip is provided, where the chip includes a processor and a communication interface, the communication interface is coupled to the processor, and the processor is configured to execute a network-side device program or instructions to implement the method according to the first aspect or implement the method according to the second aspect.

According to a ninth aspect, a computer program product is provided, where the computer program product is stored in a non-volatile storage medium, and the computer program product is executed by at least one processor to implement the method according to the first aspect or implement the method according to the second aspect.

In the embodiments of this application, after the terminal listens to the paging message, if a busy indication sending condition is met, the terminal may send a busy indication to the network side, so that the network side can perform corresponding processing to avoid a waste of network resources because the terminal continues to be paged. If the condition is not met, the terminal may choose not to send a busy indication, so as to avoid affecting, as far as possible, a service currently being executed by the terminal.

### BRIEF DESCRIPTION OF THE DRAWINGS

FIG. 1 is a block diagram of a wireless communication system applicable to an embodiment of this application;
FIG. 2 is a schematic flowchart of a busy indication transmission method according to an embodiment of this application;
FIG. 3 is a schematic flowchart of a busy indication transmission method according to an embodiment of this application;
FIG. 4 is a schematic structural diagram of a busy indication transmission apparatus according to an embodiment of this application;
FIG. 5 is a schematic structural diagram of a busy indication transmission apparatus according to an embodiment of this application;
FIG. 6 is a schematic structural diagram of a communication device according to an embodiment of this application;
FIG. 7 is a schematic structural diagram of hardware of a terminal according to an embodiment of this application; and
FIG. 8 is a schematic structural diagram of hardware of a network side device according to an embodiment of this application.

### DETAILED DESCRIPTION

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without making creative efforts shall fall within the protection scope of this application.

In the specification and claims of this application, the terms "first" and "second" are used to distinguish between similar objects, but are unnecessarily used to describe a specific sequence or order. It should be understood that data terms in such a way is exchangeable in a proper case, so that the embodiments of this application described herein can be implemented in an order other than the order shown or described herein. In addition, objects distinguished by "first", "second", and the like are generally of one type, and a quantity of objects is not limited. For example, there may be one or more first objects. In addition, "and/or" in this specification and the claims represents at least one of the connected objects, and the character "/" generally represents an "or" relationship between the associated objects.

It should be noted that technologies described in embodiments of this application are not limited to a Long Term Evolution (Long Term Evolution, LTE)/LTE-Advanced (LTE-Advanced, LTE-A) system, and may be further applied to another wireless communication system such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-LTE-A), and another system. The terms "system" and "network" in the embodiments of this application are often used interchangeably. The described technology may be used in the foregoing system and radio technology, or may be used in another system and radio technology. The following description describes a New Radio (New Radio, NR) system for example, and the NR term is used in most of the following descriptions. However, these technologies may also be applied to applications other than NR system applications, such as a 6th Generation (6^{th} Generation, 6G) communication system.

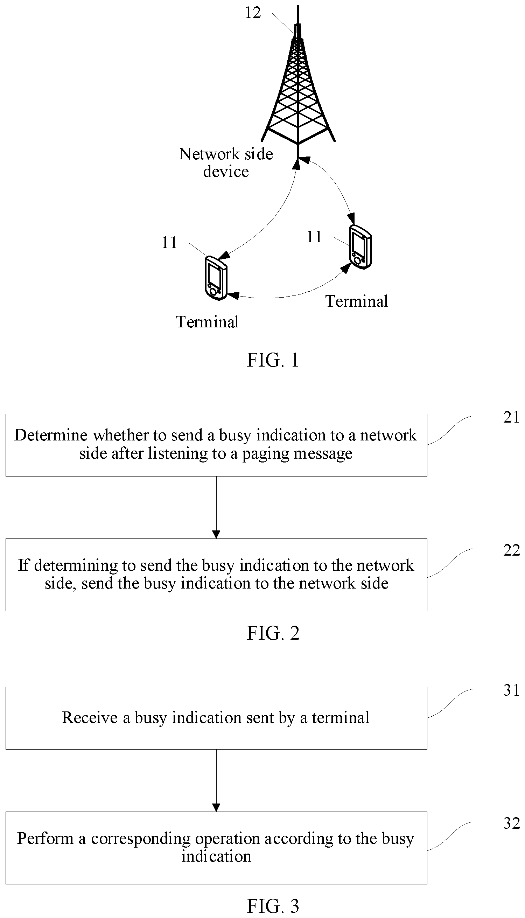

FIG. 1 is a block diagram of a wireless communication system applicable to an embodiment of this application. The wireless communication system includes a terminal 11 and a network side device 12. The terminal 11 may also be referred to as a terminal device or a user equipment (User Equipment, UE). The terminal 11 may be a terminal device such as a mobile phone, a tablet computer (Tablet Personal Computer), a laptop computer (Laptop Computer), a personal digital assistant (Personal Digital Assistant, PDA), a palmtop computer, a netbook, a ultra-mobile personal computer (ultra-mobile personal computer, UMPC), a mobile Internet device (Mobile Internet Device, MID), a wearable device (Wearable Device), or a vehicle user equipment (VUE), or a pedestrian user equipment (PUE). The wearable device includes: a band, a headset, glasses, and the like. It should be noted that a specific type of the terminal 11 is not limited in this embodiment of this application. The network side device 12 may be a base station or a core network. The base station may be referred to as a Node B, an evolved Node B, an access point, a base transceiver station (Base Transceiver Station, BTS), a radio base station, a radio transceiver, a basic service set (Basic Service Set, BSS), an extended service set (Extended Service Set, ESS), a Node B, an evolved Node B (eNB), a home Node B, a home evolved Node B, a WLAN access point, a Wi-Fi node, a transmitting receiving point (Transmitting Receiving Point, TRP), or another suitable term in the field. Provided that a same technical effect is achieved, the base station is not limited to a specific technical term. It needs to be noted that, in this application, only a base station in a NR system is used as an example, but a specific type of the base station is not limited.

With reference to the accompanying drawings, the following describes in detail the busy indication transmission method and apparatus provided in the embodiments of this application by using specific embodiments and application scenarios thereof.

To avoid repetition in this application, if no special description is provided, a specific method described in the embodiment in FIG. 2 may be extended to another embodiment in this application.

Referring to FIG. 2, FIG. 2 is a schematic flowchart of a busy indication transmission method according to an embodiment of this application. The method is performed by a terminal and includes:
Step 21: Determine whether to send a busy indication to a network side after listening to a paging message.
Step 22: If determining to send the busy indication to the network side, send the busy indication to the network side.

The terminal in this embodiment of this application may be a single-card terminal, or may be a multi-card terminal.

When the terminal in this embodiment of this application is a multi-card terminal, the terminal may be considered as a terminal corresponding to one of multiple cards of the multi-card terminal.

In this embodiment of this application, after the terminal listens to the paging message, if a busy indication sending condition is met, the terminal may send a busy indication to the network side, so that the network side can perform corresponding processing to avoid a waste of network resources because the terminal continues to be paged. If the condition is not met, the terminal may choose not to send a busy indication, so as to avoid affecting, as far as possible, a service currently being executed by the terminal.

In some other embodiments of this application, the terminal may alternatively be a single-card terminal. For example, when the terminal does not want to process a service that triggers current paging, the terminal may send a busy indication to the network side, so that the network side can perform corresponding processing to avoid a waste of network resources because the terminal continues to be paged. If the condition is not met, the terminal may choose not to send a busy indication, so as to avoid affecting, as far as possible, a service currently being executed by the terminal.

In this embodiment of this application, optionally, the busy indication includes at least one of the following: an RRC layer busy indication or a non-access stratum (Non-Access Stratum, NAS) busy indication. The busy indication may also be represented as an AS layer busy indication and a NAS busy indication.

In this embodiment of this application, optionally, the determining whether to send a busy indication to a network side after listening to a paging message includes:
in a case that at least one of a first condition, a second condition, and a third condition is met, determining to send the busy indication to the network side.

The first condition includes at least one of the following:
A1) The paging message is sent by a network side of one card of the terminal, and a service priority corresponding to the paging message is lower than or equal to a service priority that is being executed or to be executed by the terminal on another card.

In this embodiment of this application, the terminal may be a multi-card terminal. The foregoing condition A1) may be further interpreted as follows: A service priority corresponding to the paging message received by the terminal is lower than or equal to a service priority that is being executed or to be executed by another terminal, where the another terminal and the terminal are multiple terminals corresponding to multiple cards of one multi-card terminal. Alternatively, a service priority corresponding to the paging message is lower than or equal to a service priority that is being executed or to be executed by another terminal, and the another terminal is related to or shares same user equipment with the terminal.

In this embodiment of this application, the service priority corresponding to the paging message and a service priority that is being executed or to be executed by the terminal on another card may be implemented by the terminal, agreed by a protocol, or configured by the network side. The service priority corresponding to the paging message may be a service type indicated by a paging cause carried in the paging message.

A2) The paging message is sent by a network side of one card of the terminal, and another card of the terminal is executing or is about to execute a preset service.

The preset service is, for example, a voice service or a game.

In this embodiment of this application, the terminal may be a multi-card terminal. The foregoing condition A2) may be further interpreted as follows: When the terminal receives the paging message, another terminal is executing or is to execute a preset service, where the another terminal and the terminal are multiple terminals corresponding to multiple cards of a multi-card terminal, or the another terminal and the terminal are related to or share same user equipment.

In this embodiment of this application, the preset service may be implemented by the terminal, agreed by a protocol, or configured by the network side.

A3) Before listening to the paging message, the terminal does not send leave indication information to the network side, where the leave indication information is used to indicate that the terminal cannot send or receive data on the network side.

The leave indication information includes a leave message, a leave request, a leave notification, negotiation leave, a handover notification, or a handover request. All are used to indicate that the terminal cannot send or receive data on the network side, or request the network side to release the terminal, or indicate that the terminal cannot monitor and/or respond to paging, or indicate that the terminal is busy on another card, or indicate the terminal to leave the network side, or indicate the terminal to switch to a network side corresponding to another card.

In an implementation, the terminal does not send the leave indication information to the network side within a preset time before listening to the paging message. The preset time may be implemented based on the terminal, configured by the network, or agreed by a protocol.

A4) Before listening to the paging message, the terminal does not send the busy indication to the network side.

In an implementation, the terminal does not send the busy indication to the network side within a preset time before listening to the paging message. The preset time may be implemented based on the terminal, configured by the network, or agreed by a protocol.

The second condition includes at least one of the following:
B1) An anchor (Anchor) base station or a last serving (the last serving) base station is capable of receiving or processing an RRC layer busy indication or requires the terminal to send an RRC layer busy indication.

In this embodiment of this application, if the terminal is a multi-card terminal, the anchor base station or the last serving base station is an anchor base station or a last serving base station of a card that receives a paging message.

In this embodiment of this application, the anchor base station or the last serving base station may notify the terminal through dedicated signaling or a broadcast message that after receiving a paging message sent by a local network, if the terminal is busy or cannot process a service that triggers current paging, the terminal needs to send RRC layer busy indication information to the local network. Alternatively, the anchor base station or the last serving base station may notify the terminal through dedicated signaling or a broadcast message that the network side can receive and/or process the RRC layer busy indication information.

B2) The anchor base station or the last serving base station supports sending of a paging cause.

In this embodiment of this application, the anchor base station or the last serving base station supports sending of a paging cause, which means that when receiving a paging message sent by the anchor base station or the last serving base station, the terminal may determine to send the busy indication according to the paging cause, and the anchor base station or the last serving base station may simultaneously support receiving of the busy indication. The terminal may also learn, based on a protocol agreement or other information, whether the anchor base station or the last serving base station supports sending of a paging cause, for example, supports sending of a paging cause in a public land mobile network (Public Land Mobile Network, PLMN), the terminal may learn, by obtaining PLMN information, whether the anchor base station or the last serving base station supports sending of a paging cause.

B3) The anchor base station or the last serving base station supports a function or a feature related to a multi-card terminal.

The third condition includes at least one of the following:
C1) A core network is capable of receiving or processing a NAS busy indication or requires the terminal to send a NAS busy indication.

In this embodiment of this application, if the terminal is a multi-card terminal, the core network is a core network of a card that receives a paging message.

Optionally, the core network may include but is not limited to at least one of the following: a core network device, a core network node, a core network function, a core network element, a mobility management entity (Mobility Management Entity, MME), an access management function (Access Management Function, AMF), a session management function (Session Management Function, SMF), a user plane function (User Plane Function, UPF), a serving gateway (serving GW, SGW), a PDN gateway (PDN Gate Way, PDN gateway), a policy control function (Policy Control Function, PCF), a policy and charging rules function unit (Policy and Charging Rules Function, PCRF), a serving GPRS support node (Serving GPRS Support Node, SGSN), a gateway GPRS support node (Gateway GPRS Support Node, GGSN), and an application function (Application Function).

C2) The core network supports sending of a paging cause.

C3) The core network supports a function or a feature related to a multi-card terminal.

To avoid repetition, if no special description is provided, specific descriptions for the first condition and the second condition may also be applied to the third condition.

In this embodiment of this application, optionally, the determining whether to send a busy indication to a network side after listening to a paging message includes:
in a case that at least one of a fourth condition, a fifth condition, or a sixth condition is met, determining not to send the busy indication to the network side.

The fourth condition includes at least one of the following:
D1) The paging message is sent by a network side of one card of the terminal, and a service priority corresponding to the paging message is higher than a service priority that is being executed or to be executed by the terminal on another card.

In this embodiment of this application, the terminal may be a multi-card terminal. In this case, the foregoing condition D1) may be further interpreted as follows: A service priority corresponding to the paging message received by the terminal is higher than a service priority that is being executed or to be executed by another terminal, where the another terminal and the terminal are multiple terminals corresponding to multiple cards of one multi-card terminal. Alternatively, a service priority corresponding to the paging message is higher than a service priority that is being executed or to be executed by another terminal, and the another terminal is related to or shares same user equipment with the terminal.

In this embodiment of this application, the service priority corresponding to the paging message and a service priority that is being executed or to be executed by the terminal on another card may be implemented by the terminal, agreed by a protocol, or configured by the network side. The service priority corresponding to the paging message may be a service type indicated by a paging cause carried in the paging message.

D2) Before listening to the paging message, the terminal have sent leave indication information to the network side, where the leave indication information is used to indicate that the terminal cannot send or receive data on the network side.

The leave indication information includes a leave message, a leave request, a leave notification, negotiation leave, a handover notification, or a handover request. All are used to indicate that the terminal cannot send or receive data on the network side, or request the network side to release the terminal, or indicate that the terminal cannot monitor and/or respond to paging, or indicate that the terminal is busy on another card, or indicate the terminal to leave the network side, or indicate the terminal to switch to a network side corresponding to another card.

In an implementation, the terminal has sent the leave indication information to the network side within a preset time before listening to the paging message. The preset time may be implemented based on the terminal, configured by the network, or agreed by a protocol.

D3) Before listening to the paging message, the terminal has sent the busy indication to the network side.

In an implementation, the terminal has sent the busy indication to the network side within a preset time before listening to the paging message. The preset time may be implemented based on the terminal, configured by the network, or agreed by a protocol.

The fifth condition includes at least one of the following:
E1) an anchor base station or a last serving base station is incapable of receiving or processing an RRC layer busy indication or does not require the terminal to send an RRC layer busy indication.

In this embodiment of this application, if the terminal is a multi-card terminal, the anchor base station or the last serving base station is an anchor base station or a last serving base station of a card that receives a paging message.

In this embodiment of this application, the anchor base station or the last serving base station may notify the terminal through dedicated signaling or a broadcast message that after receiving a paging message sent by a local network, if the terminal is busy or cannot process a service that triggers current paging, the terminal does not need to send RRC layer busy indication information to the local network. Alternatively, the anchor base station or the last serving base station may notify the terminal through dedicated signaling or a broadcast message that the network side cannot receive and/or process the RRC layer busy indication information.

E2) The anchor base station or the last serving base station does not support sending of a paging cause.

In this embodiment of this application, the anchor base station or the last serving base station does not support sending of a paging cause, which means that when receiving a paging message sent by the anchor base station or the last serving base station, the terminal cannot determine to send the busy indication according to the paging cause, and the anchor base station or the last serving base station may not support receiving of the busy indication. The terminal may learn, based on a protocol agreement or other information, whether the anchor base station or the last serving base station supports sending of the paging cause.

E3) The anchor base station or the last serving base station does not support a function or a feature related to a multi-card terminal.

The sixth condition includes at least one of the following:
F1) A core network is incapable of receiving or processing a NAS busy indication or requires the terminal to send a NAS busy indication.

In this embodiment of this application, if the terminal is a multi-card terminal, the core network is a core network of a card that receives a paging message.

Optionally, the core network may include but is not limited to at least one of the following: a core network device, a core network node, a core network function, a core network element, a mobility management entity (Mobility Management Entity, MME), an access management function (Access Management Function, AMF), a session management function (Session Management Function, SMF), a user plane function (User Plane Function, UPF), a serving gateway (serving GW, SGW), a PDN gateway (PDN Gate Way, PDN gateway), a policy control function (Policy Control Function, PCF), a policy and charging rules function unit (Policy and Charging Rules Function, PCRF), a serving GPRS support node (Serving GPRS Support Node, SGSN), a gateway GPRS support node (Gateway GPRS Support Node, GGSN), and an application function (Application Function).

F2) The core network does not support sending of a paging cause.

F3) The core network does not support a function or a feature related to a multi-card terminal.

In this embodiment of this application, optionally, before the determining whether to send a busy indication to a network side, the method further includes at least one of the following:
1) Receive first indication information through a broadcast message or dedicated signaling, where the first indication information is used to indicate whether an anchor base station or a last serving base station is capable of receiving or processing an RRC layer busy indication or requires the terminal to send an RRC layer busy indication.

Optionally, the dedicated signaling is an RRC release message, an RRC connection release message, or an RRC connection reconfiguration message.

In some other embodiments of this application, optionally, whether the anchor base station or the last serving base station is capable of receiving or processing the RRC layer busy indication may further be implicitly indicated in another manner.

2) Receive second indication information through a broadcast message or dedicated signaling, where the second indication information is used to indicate whether a core network is capable of receiving or processing a NAS busy indication or requires the terminal to send a NAS busy indication.

Optionally, the dedicated signaling is an RRC release message, an RRC connection release message, an RRC connection reconfiguration message, or a NAS message.

In some other embodiments of this application, optionally, whether the core network is capable of receiving or processing the NAS busy indication may further be implicitly indicated in another manner.
3) Receive third indication information through a broadcast message or dedicated signaling, where the third indication information is used to indicate whether an anchor base station or a last serving base station supports sending of a paging cause.
4) Receive fourth indication information through a broadcast message or dedicated signaling, where the fourth indication information is used to indicate whether a core network supports sending of a paging cause.
5) Receive fifth indication information through a broadcast message or dedicated signaling, where the fifth indication information is used to indicate whether an anchor base station or a last serving base station supports a function or a feature related to a multi-card terminal.
6) Receive sixth indication information through a broadcast message or dedicated signaling, where the sixth indication information is used to indicate whether a core network supports a function or a feature related to a multi-card terminal.
7) Send seventh indication information to the network side, where the seventh indication information is used to indicate whether the terminal supports sending of the busy indication.

Optionally, the dedicated signaling for sending the third indication information may be an RRC release message, an RRC connection release message, an RRC connection reconfiguration message, or a NAS message.

In some embodiments of this application, the terminal sends the seventh indication information to the network side to indicate whether the terminal supports sending of the RRC layer busy indication. After the network side receives the seventh indication information, if the terminal is released again, if the terminal supports sending of the RRC layer busy indication, the network side may release the terminal to an RRC inactive state; or if the terminal does not support sending of the RRC layer busy indication, the network side may release the terminal to an RRC idle state.

In some embodiments, optionally, when at least one of the first condition, the second condition, and the third condition is met, the determining to send a busy indication to a network side includes at least one of the following:
1) In a case that the second condition and the third condition are met or the first condition, the second condition, and the third condition are met, determining to send the RRC layer busy indication or to send, according to an RRC state when the terminal receives the paging message, the busy indication.
   Further, optionally, the sending, according to an RRC state when the terminal receives the paging message, the busy indication includes:
   if the terminal is in an RRC inactive state (INACTIVE), sending the RRC layer busy indication; or
   if the terminal is in an RRC idle state, sending the NAS busy indication.
2) In a case that the third condition is not met and the second condition is met, or the third condition is not met and the first condition and the second condition are met, determining to send the RRC layer busy indication.
   Further, optionally, in a case that the third condition is not met and the second condition is met, or the third condition is not met and the first condition and the second condition are met, if the terminal sends the RRC layer busy indication in the RRC inactive state, or if the terminal sends the RRC layer busy indication in the RRC idle state, the terminal does not send the RRC layer busy indication.
3) In a case that the second condition is not met and the third condition is met, or the second condition is not met and the first condition and the third condition are met, determining to send the NAS busy indication.

In this embodiment of this application, optionally, the determining whether to send a busy indication to a network side includes at least one of the following:
1) In a case that the second condition is not met and the third condition is met, or the second condition is not met and the first condition and the third condition are met, determining not to send the busy indication.
   The not to send the busy indication includes not to send an RRC layer busy indication and a NAS busy indication.
2) In a case that the second condition is not met and the third condition is not met, determining not to send the busy indication.

The not to send the busy indication includes not to send an RRC layer busy indication and a NAS busy indication.

In this embodiment of this application, optionally, in a case that the second condition is not met and the third condition is met, or the second condition is not met and the first condition and the third condition are met, sending the NAS busy indication further includes: An RRC layer reports the busy indication or a paging cause in the paging message to an upper layer.

In this embodiment of this application, optionally, after the RRC layer reports the busy indication or the paging cause in the paging message to the upper layer, the method further includes: The terminal enters an RRC idle state.

In this embodiment of this application, optionally, after the terminal enters the RRC idle state, the method further includes:
setting a release cause.

Optionally, the release cause includes at least one of the following: an RRC connection failure, an RRC connection resume failure, a busy indication failure, and a first cause. The first cause is a cause other than an RRC connection failure, an RRC connection resume failure, and a busy indication failure.

In this embodiment of this application, optionally, the busy indication is carried in one of the following messages: an RRC connection resume request message, an RRC connection resume complete message, an RRC connection establishment request message, an RRC connection establishment complete message, a security mode command (Security Mode Command, SMC) complete message, and a NAS message.

Further, optionally, if the terminal receives the paging message in the RRC idle state, the busy indication is carried in one of the following messages: an RRC connection establishment request message, an RRC connection establishment complete message, a security mode command (SMC) complete message, and a NAS message.

If the terminal receives the paging message in the RRC inactive state, the busy indication is carried in one of the following messages: an RRC connection resume request message, an RRC connection resume complete message, a security mode command (SMC) complete message, and a NAS message.

In this embodiment of this application, optionally, the busy indication transmission method may further include: sending release indication information to the network side, where the release indication information is used to indicate the network side to release the terminal.

Further, optionally, the busy indication information is used to indicate the network side to release the terminal to a first RRC state, where the first RRC state is an RRC idle state or an RRC inactive state.

Optionally, the release indication information is carried in one of the following messages: an RRC connection resume request message, an RRC connection resume complete message, an RRC connection establishment request message, an RRC connection establishment complete message, a security mode command (SMC) complete message, and a NAS message.

In this embodiment of this application, the release indication information may be sent simultaneously with the busy indication. For example, if the terminal receives the paging message in the RRC inactive state, the terminal sends a NAS busy indication through an RRC connection resume complete message, where the RRC connection resume complete message carries the release indication information.

In this embodiment of this application, optionally, the busy indication transmission method may further include: indicating second timer duration to the network side, where the second timer duration is used to indicate duration in which the terminal is busy or cannot receive a paging message.

Optionally, the second timer duration is carried in one of the following messages: an RRC connection resume request message, an RRC connection resume complete message, an RRC connection establishment request message, an RRC connection establishment complete message, a security mode command SMC complete message, and a NAS message.

In this embodiment of this application, the second timer duration may be simultaneously sent with the busy indication. Alternatively, the second timer is simultaneously sent with the busy indication and the release indication information.

The second timer duration may alternatively be a value agreed in a protocol.

In this embodiment of this application, optionally, after the busy indication is sent to the network side, the method further includes at least one of the following:
if no RRC release message is received, entering, by the terminal, an RRC idle state;
if a T319 timer expires, entering, by the terminal, an RRC idle state; and
starting a first timer, where the first timer is used to indicate waiting duration of receiving an RRC release message by the terminal.

Optionally, the first timer is a newly defined timer, and duration of the first timer may be different from that of the T319 timer. A value of the first timer may alternatively be agreed in a protocol.

In this embodiment of this application, optionally, after the first timer is started, the method further includes:
if an RRC release message is received, stopping the first timer; or
if the first timer expires, the terminal being released to a first RRC state, where the first RRC state is an RRC idle state or an RRC inactive state.

Optionally, if the terminal sends release indication information to the network side, the first RRC state may be a first RRC state indicated in the release indication information or a first RRC state agreed in a protocol.

In this embodiment of this application, optionally, the busy indication transmission method further includes: sending the first timer duration and/or the first RRC state to the network side when the busy indication is sent or before the busy indication is sent.

Optionally, the sending the busy indication to the network side includes: if a random access channel failure occurs when the busy indication is sent to the network side, stopping sending the busy indication.

Referring to FIG. 3, an embodiment of this application further provides a busy indication transmission method, which is performed by a network side device. The method includes the following steps.

Step 31: Receive a busy indication sent by a terminal.

Step 32: Perform a corresponding operation according to the busy indication.

In this embodiment of this application, a network side receives the busy indication sent by the terminal, and performs corresponding processing, so as to avoid a waste of network resources because the terminal continues to be paged.

In this embodiment of this application, optionally, the busy indication includes at least one of the following: an RRC layer busy indication and a NAS busy indication.

In this embodiment of this application, optionally, the busy indication includes an RRC layer busy indication; and the performing a corresponding operation according to the busy instruction includes:
performing a first operation according to the busy instruction, where the first operation includes at least one of the following:
stopping or no longer initiating paging related to the terminal; and
discarding or blocking or caching arrived downlink data or signaling.

In this embodiment of this application, optionally, the performing a first operation according to the busy indication includes:
starting a second timer after receiving the RRC layer busy indication;
performing the first operation during running of the second timer;
if an uplink message sent by the terminal is received, stopping the second timer; and
if the second timer expires, stopping the first operation.

Optionally, the uplink message includes an RRC connection establishment request or an RRC connection resume request message or a tracking area update request (Tracking Area Update Request, TAU) or a RAN-based notification area update (RNAU).

In this embodiment of this application, optionally, the busy indication includes a NAS busy indication; and the performing a corresponding operation according to the busy instruction includes:

performing a second operation according to the busy indication, where the second operation includes at least one of the following:
sending the busy indication to an anchor base station or a last serving base station of the terminal;
stopping sending downlink data or signaling to the anchor base station or the last serving base station of the terminal;
stopping or no longer initiating paging related to the terminal; and
discarding or blocking or caching arrived downlink data or signaling.

Optionally, the performing a second operation according to the busy indication includes:
starting a second timer after receiving the NAS busy indication;
performing the second operation during running of the second timer;
if an uplink message sent by the terminal is received, stopping the second timer; and
if the second timer expires, stopping the second operation.

Optionally, the busy indication transmission method further includes: receiving release indication information sent by the terminal, where the release indication information is used to indicate a network side to release the terminal.

Optionally, after the receiving release indication information sent by the terminal, the method further includes:
sending an RRC release message to the terminal according to the release indication information; or releasing the terminal to an RRC idle state or an RRC inactive state indicated in the release indication information.

The following describes the foregoing busy indication transmission method by using an example with reference to specific embodiments.

Embodiment 1 of the present invention: A multi-card terminal sends an RRC busy indication to a network in which a card 2 in an RRC inactive state is located.

Step 1: The terminal is in an RRC inactive state on the card 2, and monitors a paging location on the card 2.

Step 2: The terminal listens to, on the card 2, a paging message (RAN paging) sent by the network of the card 2, and determines to send an RRC layer busy indication to the network of the card 2.

Further, in a case that a first condition and/or a second condition are met, it is determined to send an RRC layer busy indication to the network of the card 2. The first condition includes at least one of the following:
A1) The paging message is sent by a network side of one card of the terminal, and a service priority corresponding to the paging message is lower than or equal to a service priority that is being executed or to be executed by the terminal on another card.

For example, the terminal needs to learn, according to a paging cause carried in the received paging message of the card 2, a service type to be executed by the card 2, and the terminal knows a service type currently being executed by a card 1, and the terminal compares priorities of service types of the two cards, so as to determine whether to send a busy indication. The service priorities of the two cards may be implemented by the terminal, agreed in a protocol, or configured by the network.

For example, the card 2 is a data service, and the card 1 is a voice service. In this case, the service priority of the card 2 is lower than the service priority of the card 1.

A2) The paging message is sent by a network side of one card of the terminal, and another card of the terminal is executing or is about to execute a preset service.

For example, if the UE is executing a voice service on the card 1, to not interrupt the service being executed on the card 1, the terminal sends a busy indication to the network in which the card 2 is located.

A3) Before listening to the paging message, the terminal does not send leave indication information to the network side, where the leave indication information is used to indicate that the terminal cannot send or receive data on the network side.

A4) Before listening to the paging message, the terminal does not send the busy indication to the network side.

The second condition includes at least one of the following:
B1) An anchor (Anchor) base station or a last serving (the last serving) base station is capable of receiving or processing an RRC layer busy indication or requires the terminal to send an RRC layer busy indication.

In this embodiment of this application, the anchor base station or the last serving base station is an anchor base station or a last serving base station of the card 2.

Optionally, before the determining whether to send a busy indication to a network side, the method further includes: receiving first indication information through a broadcast message or dedicated signaling, where the first indication information is used to indicate whether an anchor base station or a last serving base station is capable of receiving or processing an RRC layer busy indication or requires the terminal to send an RRC layer busy indication.

Optionally, the dedicated signaling is an RRC release message or an RRC reconfiguration message.

In some other embodiments of this application, optionally, whether the anchor base station or the last serving base station is capable of receiving or processing the RRC layer busy indication may further be implicitly indicated in another manner.

B2) The anchor base station or the last serving base station supports sending of a paging cause.

B3) The anchor base station or the last serving base station supports a function or a feature related to a multi-card terminal.

Step 3: The terminal sends an RRC connection resume request message through the card 2, where the RRC connection resume request message carries an RRC layer busy indication.

Step 4: The terminal receives an RRC connection resume message.

Step 5: If the terminal receives an RRC release (RRC Release) message, the terminal enters a corresponding RRC state according to indication content of the RRC release message (for example, remains in an RRC inactive (RRC inactive) state or enters an RRC idle (RRC idle) state). If the terminal does not receive the RRC release message, the terminal enters an idle state. Further, if the terminal does not receive an RRC release message during running of a predefined timer (timer) (such as a T319 timer or a defined new timer of a shorter time), the terminal enters an idle state after the timer expires. Optionally, the terminal sets the release cause to one of an RRC resume failure (Resume failure), a busy indication failure (busy indication failure), or other (other).

Embodiment 2 of the present invention: The terminal sends a NAS busy indication to the network in which the card 2 is located.

Step 1: The terminal is in an RRC idle (IDLE) state on the card 2, and monitors a paging location on the card 2.

Step 2: The terminal listens to, on the card 2, a paging message (CN paging) sent by the network of the card 2, and determines to send a NAS busy indication to the network of the card 2.

Further, when the first condition and/or a third condition are met, the NAS busy indication is sent to the network of the card 2. If not met, the UE does not send a busy indication.

For the first condition, refer to Embodiment 1.

The third condition includes at least one of the following:
C1) A core network is capable of receiving or processing a NAS busy indication or requires the terminal to send a NAS busy indication.

In this embodiment of this application, the core network is a core network of the card 2.

In some other embodiments of this application, optionally, whether the core network is capable of receiving or processing the NAS busy indication may further be implicitly indicated in another manner.

In this embodiment of this application, optionally, before the determining whether to send a busy indication to a network side, the method further includes: receiving first indication information through a broadcast message or dedicated signaling, where the first indication information is used to indicate whether an anchor base station or a last serving base station is capable of receiving or processing an RRC layer busy indication or requires the terminal to send an RRC layer busy indication.

Optionally, the dedicated signaling is an RRC release message, an RRC reconfiguration message, or a NAS message.

Optionally, whether the anchor base station or the last serving base station is capable of receiving or processing the RRC layer busy indication may further be implicitly indicated in another manner.

C2) The core network supports sending of a paging cause.

C3) The core network supports a function or a feature related to a multi-card terminal.

Step 3: The terminal sends an RRC connection establishment request message.

Step 4: The terminal receives an RRC connection establishment message.

Step 5: The terminal sends an RRC connection establishment complete message (that is, msg5), where the RRC connection establishment complete message carries a NAS busy indication.

Optionally, the terminal further carries release indication information, which is used to indicate the network side to release the terminal. Further, optionally, the RRC state that indicates the network side to release is an RRC idle state or an RRC inactive state.

Step 6: If the terminal receives an RRC release message, the terminal enters a corresponding RRC state according to indication content of the RRC release message (for example, remains in an RRC inactive state or enters an RRC idle state). If the terminal does not receive the RRC release message, the UE is locally released (local release), and the released RRC state may be determined according to the RRC state reported by the terminal in the release indication message in step 5, or released to a corresponding RRC state according to a protocol agreement (for example, released to the RRC idle state according to a protocol agreement). Optionally, the RRC release message is not received during running of a predefined timer, and the UE is locally released.

Optionally, the release cause is set to one of an RRC connection failure, a busy indication failure, or other.

The solution in this embodiment may also be used in an RRC inactive state, and the UE sends a busy indication. In the foregoing solution, the RRC connection establishment request, the RRC connection establishment request, the RRC connection establishment complete message, and the RRC connection resume complete message are replaced with the RRC connection resume request, the RRC connection resume, and the RRC connection resume complete message.

Embodiment 3 of the present invention: A terminal behavior when a second condition is not met

Step 1: If the second condition of step 2 in Embodiment 1 is not met, the terminal may perform one of the following operations:
a) The terminal does not send an RRC layer busy indication. The process ends.
b) The terminal decides to send a NAS busy indication.

Further, if the second condition is not met because the terminal receives the paging cause, but the anchor base station or the last serving base station cannot receive or process the RRC layer busy indication, the terminal sends the NAS busy indication.

Further, optionally, the NAS busy indication is sent when the core network can receive or process the NAS busy indication, or when the third condition in Embodiment 2 is met.

In addition, the RRC layer of the terminal reports a busy indication (busy indication) or a paging cause (paging cause) to an upper layer (upper layer).

Step 2: An upper layer of the terminal generates a NAS message, where the NAS message carries a NAS busy indication, sends the NAS message to an RRC layer, and requests the RRC layer to initiate an RRC connection resume request. Optionally, the NAS layer indicates an access category (Access category), such as Access category=0, to the RRC layer.

Step 3: After receiving the NAS message sent by the upper layer, the RRC layer of the UE performs unified access control (UAC) (if the upper layer does not provide an access category, the RRC layer may set an access category for this access attempt, for example, 0), and sends an RRC connection resume request to the network side of the card 2.

Step 4: The terminal receives an RRC connection resume message.

Step 5: The terminal sends an RRC connection resume complete message, where the RRC connection resume complete message carries the NAS busy indication in step 3. Optionally, release indication information is further carried, so as to indicate the network side to release the terminal. Further, optionally, the RRC state that indicates the network side to release is an RRC idle state or an RRC inactive state.

Step 6: The terminal receives an RRC release message and enters a corresponding RRC state (idle state or inactive state) according to a network indication. If the terminal does not receive the RRC release message, the terminal is locally released. The released RRC state may be determined according to the RRC state reported by the terminal in step 5 or released to a corresponding RRC state (for example, released to the RRC idle state according to a protocol agreement). Optionally, the RRC release message is not received during running of a predefined timer, and the terminal is locally released. Optionally, the release cause is set to one of an RRC connection failure, a busy indication failure, or other.

Step 7: A base station sends a NAS busy indication to a core network.

Step 8: After receiving the NAS busy indication, the core network performs one of the following operations:
a) Send the foregoing busy indication to the anchor base station or the last serving base station of the card 2.
b) Stop sending downlink data/signaling to the anchor base station or the last serving base station; optionally, stop for a period of time.

Embodiment 4 of the present invention: After sending the busy indication to the upper layer, the RRC layer may enter the RRC idle state.

Step 1: If in step 1 in Embodiment 3, after reporting the busy indication or the paging cause to the upper layer, the RRC layer of the terminal enters the RRC idle state. Optionally, the release cause is set to one of an RRC resume failure, a busy indication failure, or other.

Step 2: An upper layer of the terminal generates a NAS message, where the NAS message carries a NAS busy indication, sends the NAS message to an RRC layer, and requests the RRC layer to initiate an RRC connection resume. Optionally, the NAS layer indicates an access category (Access category), such as Access category=0, to the RRC layer.

Step 3: After receiving the NAS message sent by the upper layer, the RRC layer of the terminal performs UAC, and sends an RRC connection establishment request message to the anchor base station or the last serving base station of the card 2.

Step 4: The terminal receives an RRC connection establishment message.

Step 5: The terminal sends an RRC connection establishment complete message, where the RRC connection establishment complete message carries the NAS busy indication in step 3. Optionally, the RRC connection establishment complete message further carries release indication information, which is used to indicate the serving anchor base station or the last serving base station to release the terminal. Optionally, the RRC state that indicates the anchor base station or the last serving base station to release is an RRC idle state or an RRC inactive state.

Step 6: The terminal receives an RRC release message, and enters a corresponding RRC state (an RRC idle state or an RRC inactive state) according to a network indication. If the terminal does not receive the RRC release message, the terminal is locally released. The released RRC state may be determined according to the RRC state reported by the terminal in step 5 or released to a corresponding RRC state (for example, released to the RRC idle state according to a protocol agreement). Optionally, the RRC release message is not received during running of a predefined timer, and the terminal is locally released. Optionally, the release cause is set to one of an RRC connection failure, a busy indication failure, or other.

Step 7: The anchor base station or the last serving base station of the card 2 sends a NAS busy indication to the core network.

Step 8: The core network receives the NAS layer busy message, and does not initiate core network paging to the terminal in a subsequent period of time.

In the foregoing embodiment, if a random access channel (Random Access Channel, RACH) failure occurs when the terminal sends an RRC layer or NAS busy indication, the terminal stops sending the busy indication.

It should be noted that, in the busy indication transmission method provided in this embodiment of this application, the execution body may be a busy indication transmission apparatus, or a control module that is in the busy indication transmission apparatus and that is used to perform the busy indication transmission method. In this embodiment of this application, an example in which a busy indication transmission apparatus executes a busy indication transmission method is used to describe the busy indication transmission apparatus provided in the embodiment of this application.

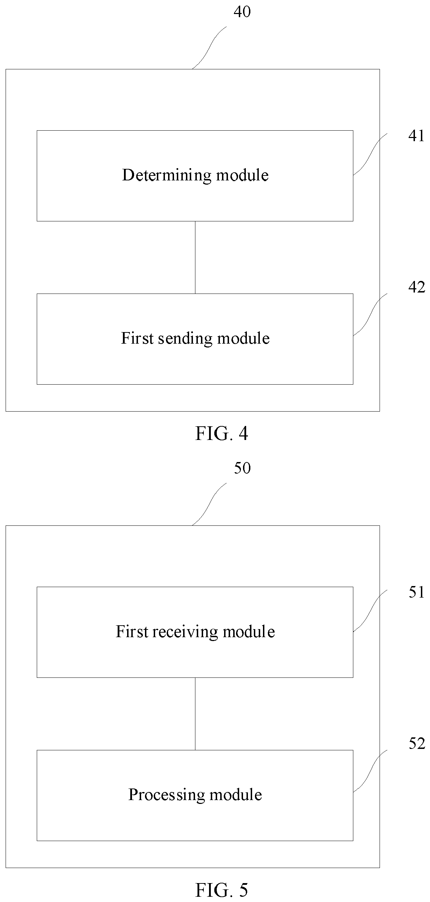

Referring to FIG. 4, an embodiment of this application further provides a busy indication transmission apparatus 40, including:
a determining module 41, configured to: determine whether to send a busy indication to a network side after listening to a paging message; and
a first sending module 42, configured to: if determining to send the busy indication to the network side, send the busy indication to the network side.

In the embodiments of this application, after the paging message is listened, if a busy indication sending condition is met, a busy indication may be sent to the network side, so that the network side can perform corresponding processing to avoid a waste of network resources because the terminal continues to be paged. If the condition is not met, a busy indication may not be sent, so as to avoid affecting, as far as possible, a service currently being executed.

Optionally, the busy indication is used to indicate that the terminal does not accept paging or rejects paging.

Optionally, the busy indication includes at least one of the following: an RRC layer busy indication and a NAS busy indication.

Optionally, the determining module 41 is configured to send, according to an RRC state when the terminal receives the paging message, a busy indication to the network side.

Optionally, the determining module 41 is configured to: in a case that at least one of a first condition, a second condition, and a third condition is met, determine to send the busy indication to the network side.

The first condition includes at least one of the following:
that the paging message is sent by a network side of one card of the terminal, and a service priority corresponding to the paging message is lower than or equal to a service priority that is being executed or to be executed by the terminal on another card;
that the paging message is sent by a network side of one card of the terminal, and another card of the terminal is executing or is about to execute a preset service;
that before listening to the paging message, the terminal does not send leave indication information to the network side, where the leave indication information is used to indicate that the terminal cannot send or receive data on the network side; and
that before listening to the paging message, the terminal does not send the busy indication to the network side.

The second condition includes at least one of the following:
that an anchor base station or a last serving base station is capable of receiving or processing an RRC layer busy indication or requires the terminal to send an RRC layer busy indication;
that the anchor base station or the last serving base station supports sending of a paging cause; and
that the anchor base station or the last serving base station supports a function or a feature related to a multi-card terminal.

The third condition includes at least one of the following:
that a core network is capable of receiving or processing a NAS busy indication or requires the terminal to send a NAS busy indication;
that the core network supports sending of a paging cause; and
that the core network supports a function or a feature related to a multi-card terminal.

Optionally, the busy indication transmission apparatus further includes at least one of the following:
a first receiving module, configured to receive first indication information through a broadcast message or dedicated signaling, where the first indication information is used to indicate whether an anchor base station or a last serving base station is capable of receiving or processing an RRC layer busy indication or requires the terminal to send an RRC layer busy indication;
a second receiving module, configured to receive second indication information through a broadcast message or dedicated signaling, where the second indication information is used to indicate whether a core network is capable of receiving or processing a NAS busy indication or requires the terminal to send a NAS busy indication;
a third receiving module, configured to receive third indication information through a broadcast message or dedicated signaling, where the third indication information is used to indicate whether an anchor base station or a last serving base station supports sending of a paging cause;
a fourth receiving module, configured to receive fourth indication information through a broadcast message or dedicated signaling, where the fourth indication information is used to indicate whether a core network supports sending of a paging cause;
a fifth receiving module, configured to receive fifth indication information through a broadcast message or dedicated signaling, where the fifth indication information is used to indicate whether an anchor base station or a last serving base station supports a function or a feature related to a multi-card terminal;
a sixth receiving module, configured to receive sixth indication information through a broadcast message or dedicated signaling, where the sixth indication information is used to indicate whether a core network supports a function or a feature related to a multi-card terminal; and
a second sending module, configured to send seventh indication information to the network side, where the seventh indication information is used to indicate whether the terminal supports sending of the busy indication.

Optionally, when at least one of the first condition, the second condition, and the third condition is met, the determining to send a busy indication to a network side includes at least one of the following:
in a case that the second condition and the third condition are met or the first condition, the second condition, and the third condition are met, determining to send the RRC layer busy indication or to send, according to an RRC state when the terminal receives the paging message, the busy indication;
in a case that the third condition is not met and the second condition is met, or the third condition is not met and the first condition and the second condition are met, determining to send the RRC layer busy indication; and
in a case that the second condition is not met and the third condition is met, or the second condition is not met and the first condition and the third condition are met, determining to send the NAS busy indication.

Optionally, the determining module 41 is further configured to perform at least one of the following:
in a case that the second condition is not met and the third condition is met, or the second condition is not met and the first condition and the third condition are met, determining not to send the busy indication; and
in a case that the second condition is not met and the third condition is not met, determining not to send the busy indication.

Optionally, the sending, according to an RRC state when the terminal receives the paging message, the busy indication includes:
if the terminal is in an RRC inactive state, sending the RRC layer busy indication; or
if the terminal is in an RRC idle state, sending the NAS busy indication.

Optionally, the busy indication is carried in one of the following messages: an RRC connection resume request message, an RRC connection resume complete message, an RRC connection establishment request message, an RRC connection establishment complete message, a security mode command SMC complete message, and a NAS message.

Optionally, the busy indication is further used to indicate the network side to release the terminal to a first RRC state, where the first RRC state is an RRC idle state or an RRC inactive state.

Optionally, the apparatus further includes:
a first determining module, configured to determine, by the terminal, a paging cause of the paging message according to the third indication information and/or the fourth indication information.

Optionally, the busy indication transmission apparatus further includes at least one of the following:
a third sending module, configured to send release indication information to the network side, where the release indication information is used to indicate the network side to release the terminal; and
a fourth sending module, configured to indicate second timer duration to the network side, where the second timer duration is used to indicate duration in which the terminal is busy or cannot receive a paging message.

Optionally, the release indication information and/or the second timer duration are carried in one of the following messages: an RRC connection resume request message, an RRC connection resume complete message, an RRC connection establishment request message, an RRC connection establishment complete message, a security mode command SMC complete message, and a NAS message.

Optionally, the busy indication transmission apparatus further includes at least one of the following:
a first processing module, configured to: after sending the busy indication to the network side, if no RRC release message is received, enter, by the terminal, an RRC idle state;
a second processing module, configured to: if a T319 timer expires, enter, by the terminal, an RRC idle state; and
a third processing module, configured to start a first timer, where the first timer is used to indicate waiting duration of receiving an RRC release message by the terminal.

Optionally, the busy indication transmission apparatus further includes at least one of the following:
a fourth processing module, configured to: if an RRC release message is received, stop the first timer; and
a fifth processing module, configured to: if the first timer expires, release the terminal to a first RRC state, where the first RRC state is an RRC idle state or an RRC inactive state.

Optionally, the busy indication transmission apparatus further includes:
a fifth sending module, configured to send the first timer duration and/or the first RRC state to the network side when the busy indication is sent or before the busy indication is sent.

Optionally, in a case that the second condition is not met and the third condition is met, or the second condition is not met and the first condition and the third condition are met, the sending the NAS busy indication further includes:

An RRC layer reports the busy indication or a paging cause in the paging message to an upper layer.

Optionally, the busy indication transmission apparatus further includes:
a sixth processing module, configured to: after the RRC layer reports the busy indication or the paging cause in the paging message to the upper layer, enter, by the terminal, an RRC idle state.

Optionally, the busy indication transmission apparatus further includes:
a seventh processing module, configured to: after the terminal enters the RRC idle state, set a release cause.

Optionally, the release cause includes at least one of the following: an RRC connection failure, an RRC connection resume failure, a busy indication failure, and a first cause.

Optionally, the busy indication transmission apparatus further includes:
an eighth processing module, configured to: if a random access channel failure occurs when the busy indication is sent to the network side, stop sending the busy indication.

The busy indication transmission apparatus in this embodiment of this application may be an apparatus, or may be a component, an integrated circuit, or a chip in a terminal. The apparatus may be a mobile terminal, or may be a non-mobile terminal. For example, the mobile terminal may include but is not limited to the type of the terminal 11 listed above. The non-mobile terminal may be a server, a network attached storage (Network Attached Storage, NAS), a personal computer (personal computer, PC), a television (television, TV), a teller machine, or a self-service machine. This is not specifically limited in this embodiment of this application.

The busy indication transmission apparatus in this embodiment of this application may be an apparatus with an operating system. The operating system may be an Android (Android) operating system, may be an ios operating system, or may be another possible operating system. This is not specifically limited in this embodiment of this application.

The busy indication transmission apparatus provided in this embodiment of this application can implement processes implemented in the method embodiment of FIG. 2, and achieve a same technical effect. To avoid repetition, details are not described herein again.

It should be noted that, in the busy indication transmission method provided in this embodiment of this application, the execution body may be a busy indication transmission apparatus, or a control module that is in the busy indication transmission apparatus and that is used to perform the busy indication transmission method. In this embodiment of this application, an example in which a busy indication transmission apparatus executes a busy indication transmission method is used to describe the busy indication transmission apparatus provided in the embodiment of this application.

Referring to FIG. 5, an embodiment of this application further provides a busy indication transmission apparatus 50, including:
a receiving module 51, configured to receive a busy indication sent by a terminal; and
a processing module 52, configured to perform a corresponding operation according to the busy indication.

Optionally, the busy indication includes at least one of the following: an RRC layer busy indication and a NAS busy indication.

Optionally, the busy indication includes an RRC layer busy indication; and the processing module 52 is configured to perform a first operation according to the busy indication, where the first operation includes at least one of the following:
stopping or no longer initiating paging related to the terminal; and
discarding or blocking or caching arrived downlink data or signaling.

Optionally, the performing a first operation according to the busy indication includes:
starting a second timer after receiving the RRC layer busy indication;
performing the first operation during running of the second timer;
if an uplink message sent by the terminal is received, stopping the second timer; and
if the second timer expires, stopping the first operation.

Optionally, the busy indication includes a NAS busy indication; and the processing module 52 is configured to perform a second operation according to the busy indication, where the second operation includes at least one of the following:
sending the busy indication to an anchor base station or a last serving base station of the terminal;
stopping sending downlink data or signaling to the anchor base station or the last serving base station of the terminal;
stopping or no longer initiating paging related to the terminal; and
discarding or blocking or caching arrived downlink data or signaling.

Optionally, the performing a second operation according to the busy indication includes:
starting a second timer after receiving the NAS busy indication;
performing the second operation during running of the second timer;
if an uplink message sent by the terminal is received, stopping the second timer; and
if the second timer expires, stopping the second operation.

Optionally, the busy indication transmission apparatus 50 further includes:
a second receiving module, configured to receive release indication information sent by the terminal, where the release indication information is used to indicate a network side to release the terminal.

Optionally, the busy indication transmission apparatus 50 further includes at least one of the following:
a sending module, configured to send an RRC release message to the terminal according to the release indication information; and
a release module, configured to release the terminal to an RRC idle state or an RRC inactive state indicated in the release indication information.

The busy indication transmission apparatus provided in this embodiment of this application can implement processes implemented in the method embodiment of FIG. 3, and achieve a same technical effect. To avoid repetition, details are not described herein again.

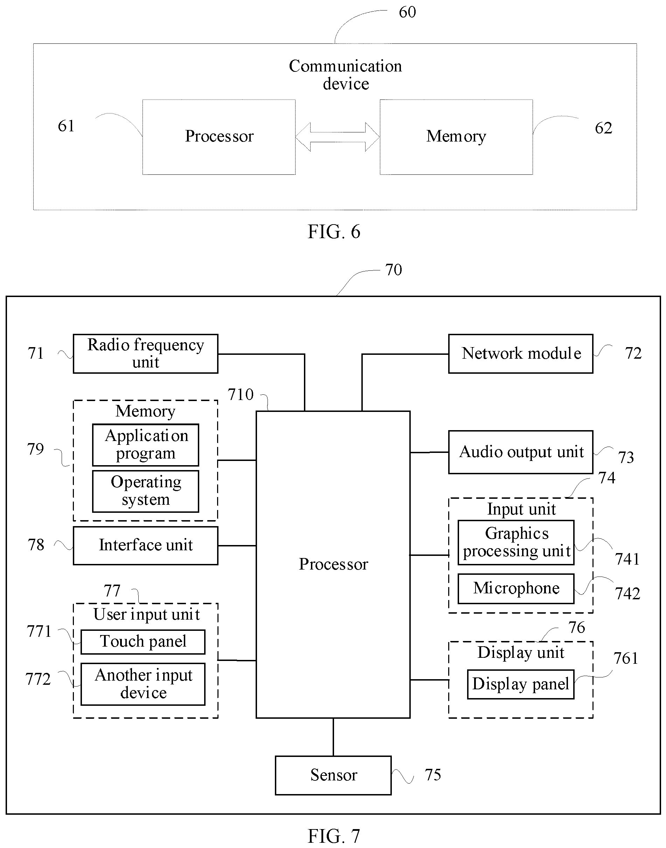

As shown in FIG. 6, an embodiment of this application further provides a communication device 60, including a processor 61, a memory 62, and a program or instructions stored in the memory 62 and executable on the processor 61. For example, when the communication device 60 is a terminal, each process of the foregoing busy indication transmission method is implemented when the program or the instructions are executed by the processor 61, and a same technical effect can be achieved. When the communication device 60 is a network side device, each process of the foregoing busy indication transmission method is implemented when the program or the instructions are executed by the processor 61, and a same technical effect can be achieved. To avoid repetition, details are not described herein again.

FIG. 7 is a schematic diagram of a hardware structure of a terminal according to an embodiment of this application. The terminal 70 includes but is not limited to components such as a radio frequency unit 71, a network module 72, an audio output unit 73, an input unit 74, a sensor 75, a display unit 76, a user input unit 77, an interface unit 78, a memory 79, and a processor 710.

A person skilled in the art may understand that the terminal 70 may further include a power supply (for example, a battery) that supplies power to each component. The power supply may be logically connected to the processor 710 by using a power management system, so as to manage functions such as charging, discharging, and power consumption by using the power management system. The terminal structure shown in FIG. 7 constitutes no limitation on the terminal, and the terminal may include more or fewer components than those shown in the figure, or combine some components, or have different component arrangements.

It should be understood that, in this embodiment of this application, the input unit 74 may include a graphics processing unit (Graphics Processing Unit, GPU) 741 and a microphone 742. The graphics processing unit 741 processes image data of a still picture or a video obtained by an image capture apparatus (such as a camera) in a video capture mode or an image capture mode. The display unit 76 may include a display panel 761. The display panel 761 may be configured in a form such as a liquid crystal display or an organic light-emitting diode. The user input unit 77 may include a touch panel 771 and another input device 772. The touch panel 771 is also referred to as a touchscreen. The touch panel 771 may include two parts: a touch detection apparatus and a touch controller. The another input device 772 may include but is not limited to a physical keyboard, a function key (such as a volume control key or an on/off key), a trackball, a mouse, and a joystick. Details are not described herein.

In this embodiment of this application, after the radio frequency unit 71 receives downlink data from the network side device, the downlink data is processed by the processor 710. In addition, uplink data is sent to the network side device. Generally, the radio frequency unit 71 includes but is not limited to: an antenna, at least one amplifier, a transceiver, a coupler, a low noise amplifier, and a duplexer.

The memory 79 may be configured to store a software program, instructions, and various data. The memory 79 may mainly include a program or instruction storage area and a data storage area, where the program or instruction storage area may store an operating system, an application program or an instruction (such as a sound play function or an image play function) required by at least one function, and the like. In addition, the memory 79 may include a high-speed random access memory, and may further include a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory, for example, at least one magnetic disk storage device, a flash memory device, or another non-volatile solid-state storage device.

The processor 710 may include one or more processing units. Optionally, the processor 710 may integrate an application processor and a modem processor. The application processor mainly processes an operating system, a user interface, an application program or an instruction, and the like. The modem processor mainly processes wireless communication such as a baseband processor. It may be understood that the modem processor may not be integrated into the processor 710.

The processor 710 is configured to: determine whether to send a busy indication to a network side after listening to a paging message; and
the radio frequency unit 71 is configured to: if determining to send the busy indication to the network side, send the busy indication to the network side.

Optionally, the busy indication includes at least one of the following: an RRC layer busy indication and a NAS busy indication.

Optionally, that the processor 710 is configured to: determine whether to send a busy indication to a network side after listening to a paging message includes:
in a case that at least one of a first condition, a second condition, and a third condition is met, determining to send the busy indication to the network side.

The first condition includes at least one of the following:
that the paging message is sent by a network side of one card of the terminal, and a service priority corresponding to the paging message is lower than or equal to a service priority that is being executed or to be executed by the terminal on another card;
that the paging message is sent by a network side of one card of the terminal, and another card of the terminal is executing or is about to execute a preset service;
that before listening to the paging message, the terminal does not send leave indication information to the network side, where the leave indication information is used to indicate that the terminal cannot send or receive data on the network side; and
that before listening to the paging message, the terminal does not send the busy indication to the network side.

The second condition includes at least one of the following:
that an anchor base station or a last serving base station is capable of receiving or processing an RRC layer busy indication or requires the terminal to send an RRC layer busy indication;
that the anchor base station or the last serving base station supports sending of a paging cause; and
that the anchor base station or the last serving base station supports a function or a feature related to a multi-card terminal.

The third condition includes at least one of the following:
that a core network is capable of receiving or processing a NAS busy indication or requires the terminal to send a NAS busy indication;
that the core network supports sending of a paging cause; and
that the core network supports a function or a feature related to a multi-card terminal.

Optionally, the radio frequency unit 71 is further configured to perform at least one of the following:
receiving first indication information through a broadcast message or dedicated signaling, where the first indication information is used to indicate whether an anchor base station or a last serving base station is capable of receiving or processing an RRC layer busy indication or requires the terminal to send an RRC layer busy indication;
receiving second indication information through a broadcast message or dedicated signaling, where the second indication information is used to indicate whether a core network is capable of receiving or processing a NAS busy indication or requires the terminal to send a NAS busy indication;
receiving third indication information through a broadcast message or dedicated signaling, where the third indication information is used to indicate whether an anchor base station or a last serving base station supports sending of a paging cause;
receiving fourth indication information through a broadcast message or dedicated signaling, where the fourth indication information is used to indicate whether a core network supports sending of a paging cause;
receiving fifth indication information through a broadcast message or dedicated signaling, where the fifth indication information is used to indicate whether an anchor base station or a last serving base station supports a function or a feature related to a multi-card terminal;
receiving sixth indication information through a broadcast message or dedicated signaling, where the sixth indication information is used to indicate whether a core network supports a function or a feature related to a multi-card terminal; and
sending seventh indication information to the network side, where the seventh indication information is used to indicate whether the terminal supports sending of the busy indication.

Optionally, that the processor 710 is configured to: when at least one of the first condition, the second condition, and the third condition is met, determine to send a busy indication to a network side includes at least one of the following:
in a case that the second condition and the third condition are met or the first condition, the second condition, and the third condition are met, determining to send the RRC layer busy indication or to send, according to an RRC state when the terminal receives the paging message, the busy indication;
in a case that the third condition is not met and the second condition is met, or the third condition is not met and the first condition and the second condition are met, determining to send the RRC layer busy indication; and
in a case that the second condition is not met and the third condition is met, or the second condition is not met and the first condition and the third condition are met, determining to send the NAS busy indication.

Optionally, that the processor 710 is configured to determine whether to send a busy indication to a network side includes at least one of the following:
in a case that the second condition is not met and the third condition is met, or the second condition is not met and the first condition and the third condition are met, determining not to send the busy indication; and
in a case that the second condition is not met and the third condition is not met, determining not to send the busy indication.

Optionally, that the processor 710 is configured to send, according to an RRC state when the terminal receives the paging message, the busy indication includes:
if the terminal is in an RRC inactive state, sending the RRC layer busy indication; or
if the terminal is in an RRC idle state, sending the NAS busy indication.

Optionally, the busy indication is carried in one of the following messages: an RRC connection resume request message, an RRC connection resume complete message, an RRC connection establishment request message, an RRC connection establishment complete message, a security mode command SMC complete message, and a NAS message.

Optionally, the radio frequency unit 71 is further configured to perform at least one of the following:
sending release indication information to the network side, where the release indication information is used to indicate the network side to release the terminal; and
indicating second timer duration to the network side, where the second timer duration is used to indicate duration in which the terminal is busy or cannot receive a paging message.

Optionally, the release indication information and/or the second timer duration are carried in one of the following messages: an RRC connection resume request message, an RRC connection resume complete message, an RRC connection establishment request message, an RRC connection establishment complete message, a security mode command SMC complete message, and a NAS message.

Optionally, the processor 710 is further configured to: after sending the busy indication to the network side, perform at least one of the following:
if no RRC release message is received, the terminal enters an RRC idle state;
if a T319 timer expires, the terminal enters an RRC idle state; and
start a first timer, where the first timer is used to indicate waiting duration of receiving an RRC release message by the terminal.

Optionally, the processor 710 is further configured to:
if an RRC release message is received, stop the first timer; or
if the first timer expires, release the terminal to a first RRC state, where the first RRC state is an RRC idle state or an RRC inactive state.

Optionally, the radio frequency unit 71 is further configured to: send the first timer duration and/or the first RRC state to the network side when the busy indication is sent or before the busy indication is sent.

Optionally, that the processor 710 is further configured to: in a case that the second condition is not met and the third condition is met, or the second condition is not met and the first condition and the third condition are met, determine to send the NAS busy indication further includes:
An RRC layer reports the busy indication or a paging cause in the paging message to an upper layer.

Optionally, the processor 710 is further configured to: after the RRC layer reports the busy indication or the paging cause in the paging message to the upper layer, enter an RRC idle state.

Optionally, the processor 710 is further configured to: after entering the RRC idle state, set a release cause.

Optionally, the release cause includes at least one of the following: an RRC connection failure, an RRC connection resume failure, a busy indication failure, and a first cause.

Optionally, the processor 710 is further configured to: if a random access channel failure occurs when the busy indication is sent to the network side, stop sending the busy indication.

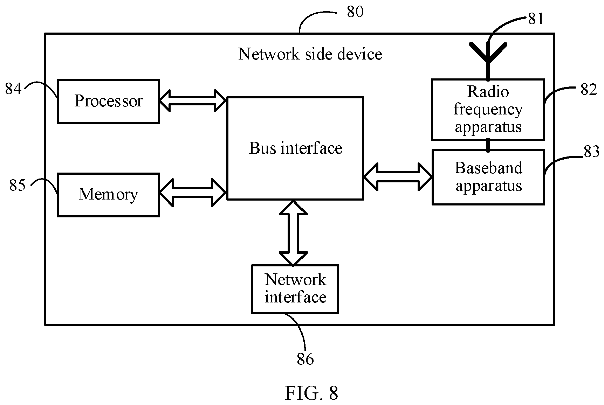

An embodiment of this application further provides a network side device. As shown in FIG. 8, the network device 80 includes an antenna 81, a radio frequency apparatus 82, and a baseband apparatus 83. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes information that needs to be sent, and sends processed information to the radio frequency apparatus 82. The radio frequency apparatus 82 processes the received information, and sends processed information by using the antenna 81.

The frequency band processing apparatus may be located in the baseband apparatus 83, and the method performed by the network side device in the foregoing embodiment may be implemented in the baseband apparatus 83. The baseband apparatus 83 includes a processor 84 and a memory 85.

The baseband apparatus 83 may include, for example, at least one baseband board, where a plurality of chips are disposed on the baseband board. As shown in FIG. 8, one chip is, for example, the processor 84, which is connected to the memory 85, so as to schedule a program in the memory 85 to perform an operation of the network device shown in the foregoing method embodiment.

The baseband apparatus 83 may further include a network interface 86, configured to exchange information with the radio frequency apparatus 82. For example, the interface is a common public radio interface (common public radio interface, CPRI for short).

Specifically, the network side device in this embodiment of the present invention further includes instructions or a program stored in the memory 85 and executable on the processor 84. The processor 84 invokes the instructions or the program in the memory 85 to perform the method performed by the modules shown in FIG. 5, and achieves a same technical effect. To avoid repetition, details are not described herein again.

An embodiment of this application further provides a readable storage medium. The readable storage medium stores a program or instructions. When the program or the instructions are executed by a processor, various processes in the foregoing busy indication transmission method embodiments are implemented, and a same technical effect can be achieved. To avoid repetition, details are not described herein again.

An embodiment of this application further provides a readable storage medium. The readable storage medium stores a program or instructions. When the program or the instructions are executed by a processor, various processes in the foregoing busy indication transmission method embodiments are implemented, and a same technical effect can be achieved. To avoid repetition, details are not described herein again.

The processor is a processor in the terminal in the foregoing embodiment. The readable storage medium includes a computer-readable storage medium such as a read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to execute a program or instructions of a network side device to implement various processes in the foregoing busy indication transmission method embodiment executed by a terminal, and a same technical effect can be achieved. To avoid repetition, details are not described herein again.

An embodiment of this application further provides a chip. The chip includes a processor and a communication interface. The communication interface is coupled to the processor. The processor is configured to execute a program or instructions of a network side device to implement various processes in the of the foregoing busy indication transmission method embodiment executed by a network side, and a same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program product, where the computer program product is stored in a non-volatile storage medium, and the computer program product is executed by at least one processor to implement various processes in the foregoing busy indication transmission method embodiment executed by a terminal, and a same technical effect can be achieved. To avoid repetition, details are not described herein again.

An embodiment of this application further provides a computer program product, where the computer program product is stored in a non-volatile storage medium, and the computer program product is executed by at least one processor to implement various processes in the foregoing busy indication transmission method embodiment executed by a network side, and a same technical effect can be achieved. To avoid repetition, details are not described herein again.

It should be noted that, the terms "include", "comprise", or any other variation thereof in this specification are intended to cover a non-exclusive inclusion, so that a process, method, article, or apparatus that includes a list of elements includes the elements, and also includes other elements that are not expressly listed, or further includes elements inherent to such a process, method, article, or apparatus. Without more limitations, elements defined by the sentence "including one" does not exclude that there are still other same elements in the processes, methods, objects, or apparatuses that include the elements. In addition, it should be noted that the scope of the method and apparatus in the embodiments of this application is not limited to performing a function in a sequence shown or discussed, and may further include performing a function in a basically simultaneous manner or in a reverse sequence based on a related function. For example, the described method may be performed in an order from the described order, and various steps may be added, omitted, or combined. In addition, features described with reference to some examples may be combined in other examples.

Based on the descriptions in the foregoing implementations, a person skilled in the art may clearly learn that the method in the foregoing embodiment may be implemented by software in addition to a necessary universal hardware platform or by hardware only. In most circumstances, the former is a better implementation. Based on such an understanding, the technical solutions of this application essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. The foregoing specific implementations are merely examples, and are not restrictive. Under the enlightenment of this application, many forms may be further made by a person of ordinary skill in the art without departing from the objective of this application and the protection scope of the claims and shall fall within the protection scope of this application.

## Claims

1. A busy indication transmission method, performed by a terminal, wherein the method comprises:
determining whether to send a busy indication to a network side after listening to a paging message; and
if determining to send the busy indication to the network side, sending the busy indication to the network side.

2. The method according to claim 1, wherein the busy indication is used to indicate that the terminal does not accept paging or rejects paging.

3. The method according to claim 1 or 2, wherein the busy indication comprises at least one of the following: a radio resource control RRC layer busy indication and a non-access stratum NAS busy indication.

4. The method according to any one of claims 1 to 3, wherein the determining whether to send a busy indication to a network side comprises:
sending, according to an RRC state when the terminal receives the paging message, a busy indication to the network side.

5. The method according to any one of claims 1 to 3, wherein the determining whether to send a busy indication to a network side after listening to a paging message comprises:
in a case that at least one of a first condition, a second condition, and a third condition is met, determining to send the busy indication to the network side, wherein
the first condition comprises at least one of the following:
that the paging message is sent by a network side of one card of the terminal, and a service priority corresponding to the paging message is lower than or equal to a service priority that is being executed or to be executed by the terminal on another card;
that the paging message is sent by a network side of one card of the terminal, and another card of the terminal is executing or is about to execute a preset service;
that before listening to the paging message, the terminal does not send leave indication information to the network side, wherein the leave indication information is used to indicate that the terminal cannot send or receive data on the network side; and
that before listening to the paging message, the terminal does not send the busy indication to the network side;
the second condition comprises at least one of the following:
that an anchor base station or a last serving base station is capable of receiving or processing an RRC layer busy indication or requires the terminal to send an RRC layer busy indication;
that the anchor base station or the last serving base station supports sending of a paging cause; and
that the anchor base station or the last serving base station supports a function or a feature related to a multi-card terminal; and
the third condition comprises at least one of the following:
that a core network is capable of receiving or processing a NAS busy indication or requires the terminal to send a NAS busy indication;
that the core network supports sending of a paging cause; and
that the core network supports a function or a feature related to a multi-card terminal.

6. The method according to any one of claims 1 to 5, before the determining whether to send a busy indication to a network side, further comprising at least one of the following:
receiving first indication information through a broadcast message or dedicated signaling, wherein the first indication information is used to indicate whether an anchor base station or a last serving base station is capable of receiving or processing an RRC layer busy indication or requires the terminal to send an RRC layer busy indication;
receiving second indication information through a broadcast message or dedicated signaling, wherein the second indication information is used to indicate whether a core network is capable of receiving or processing a NAS busy indication or requires the terminal to send a NAS busy indication;
receiving third indication information through a broadcast message or dedicated signaling, wherein the third indication information is used to indicate whether an anchor base station or a last serving base station supports sending of a paging cause;
receiving fourth indication information through a broadcast message or dedicated signaling, wherein the fourth indication information is used to indicate whether a core network supports sending of a paging cause;
receiving fifth indication information through a broadcast message or dedicated signaling, wherein the fifth indication information is used to indicate whether an anchor base station or a last serving base station supports a function or a feature related to a multi-card terminal;
receiving sixth indication information through a broadcast message or dedicated signaling, wherein the sixth indication information is used to indicate whether a core network supports a function or a feature related to a multi-card terminal; and
sending seventh indication information to the network side, wherein the seventh indication information is used to indicate whether the terminal supports sending of the busy indication.

7. The method according to claim 5, wherein in a case that at least one of the first condition, the second condition, and the third condition is met, the determining to send a busy indication to a network side comprises at least one of the following:
in a case that the second condition and the third condition are met or the first condition, the second condition, and the third condition are met, determining to send the RRC layer busy indication or to send, according to an RRC state when the terminal receives the paging message, the busy indication;
in a case that the third condition is not met and the second condition is met, or the third condition is not met and the first condition and the second condition are met, determining to send the RRC layer busy indication; and
in a case that the second condition is not met and the third condition is met, or the second condition is not met and the first condition and the third condition are met, determining to send the NAS busy indication.

8. The method according to claim 5, wherein the determining whether to send a busy indication to a network side comprises at least one of the following:
in a case that the second condition is not met and the third condition is met, or the second condition is not met and the first condition and the third condition are met, determining not to send the busy indication; and
in a case that the second condition is not met and the third condition is not met, determining not to send the busy indication.

9. The method according to claim 4 or 7, wherein the sending, according to an RRC state when the terminal receives the paging message, the busy indication comprises:
if the terminal is in an RRC inactive state, sending the RRC layer busy indication; or
if the terminal is in an RRC idle state, sending the NAS busy indication.

10. The method according to any one of claims 1 to 9, wherein the busy indication is carried in one of the following messages: an RRC connection resume request message, an RRC connection resume complete message, an RRC connection establishment request message, an RRC connection establishment complete message, a security mode command SMC complete message, and a NAS message.

11. The method according to any one of claims 1 to 10, wherein the busy indication is further used to indicate the network side to release the terminal to a first RRC state, and the first RRC state is an RRC idle state or an RRC inactive state.

12. The method according to claim 6, wherein the method further comprises:
determining, by the terminal, a paging cause of the paging message according to the third indication information and/or the fourth indication information.

13. The method according to any one of claims 1 to 12, further comprising at least one of the following:
sending release indication information to the network side, wherein the release indication information is used to indicate the network side to release the terminal; and
indicating second timer duration to the network side, wherein the second timer duration is used to indicate duration in which the terminal is busy or cannot receive a paging message.

14. The method according to claim 13, wherein the release indication information and/or the second timer duration are carried in one of the following messages: an RRC connection resume request message, an RRC connection resume complete message, an RRC connection establishment request message, an RRC connection establishment complete message, a security mode command SMC complete message, and a NAS message.

15. The method according to any one of claims 1 to 14, after the sending the busy indication to the network side, further comprising at least one of the following:
if no RRC release message is received, entering, by the terminal, an RRC idle state;
if a T319 timer expires, entering, by the terminal, an RRC idle state; and
starting a first timer, wherein the first timer is used to indicate waiting duration of receiving an RRC release message by the terminal.

16. The method according to claim 15, after the starting a first timer, further comprising:
if an RRC release message is received, stopping the first timer; or
if the first timer expires, the terminal being released to a first RRC state, wherein the first RRC state is an RRC idle state or an RRC inactive state.

17. The method according to claim 16, further comprising:
sending first timer duration and/or the first RRC state to the network side when the busy indication is sent or before the busy indication is sent.

18. The method according to claim 7, wherein if the second condition is not met and the third condition is met, or the second condition is not met and the first condition and the third condition are met, the sending the NAS busy indication further comprises:
reporting, by an RRC layer, the busy indication or a paging cause in the paging message to an upper layer.

19. The method according to claim 18, after the reporting, by an RRC layer, the busy indication or a paging cause in the paging message to an upper layer, further comprising:
entering, by the terminal, an RRC idle state.

20. The method according to claim 15, 16, 17, or 19, after the entering, by the terminal, an RRC idle state, further comprising:
setting a release cause.

21. The method according to claim 20, wherein the release cause comprises at least one of the following: an RRC connection failure, an RRC connection resume failure, a busy indication failure, and a first cause.

22. The method according to any one of claims 1 to 21, wherein the sending the busy indication to the network side comprises:
if a random access channel failure occurs when the busy indication is sent to the network side, stopping sending the busy indication.

23. A busy indication transmission method, performed by a network side device, wherein the method comprises:
receiving a busy indication sent by a terminal; and
performing a corresponding operation according to the busy indication.

24. The method according to claim 23, wherein the busy indication comprises at least one of the following: an RRC layer busy indication and a NAS busy indication.

25. The method according to claim 24, wherein the busy indication comprises an RRC layer busy indication; and the performing a corresponding operation according to the busy indication comprises:
performing a first operation according to the busy indication, wherein the first operation comprises at least one of the following:
stopping or no longer initiating paging related to the terminal; and
discarding or blocking or caching arrived downlink data or signaling.

26. The method according to claim 25, wherein the performing a first operation according to the busy indication comprises:
starting a second timer after receiving the RRC layer busy indication;
performing the first operation during running of the second timer;
if an uplink message sent by the terminal is received, stopping the second timer; and
if the second timer expires, stopping the first operation.

27. The method according to claim 24, wherein the busy indication comprises a NAS busy indication; and the performing a corresponding operation according to the busy indication comprises:
performing a second operation according to the busy indication, wherein the second operation comprises at least one of the following:
sending the busy indication to an anchor base station or a last serving base station of the terminal;
stopping sending downlink data or signaling to the anchor base station or the last serving base station of the terminal;
stopping or no longer initiating paging related to the terminal; and
discarding or blocking or caching arrived downlink data or signaling.

28. The method according to claim 27, wherein the performing a second operation according to the busy indication comprises:
starting a second timer after receiving the NAS busy indication;
performing the second operation during running of the second timer;
if an uplink message sent by the terminal is received, stopping the second timer; and
if the second timer expires, stopping the second operation.

29. The method according to any one of claims 23 to 28, further comprising:
receiving release indication information sent by the terminal, wherein the release indication information is used to indicate a network side to release the terminal.

30. The method according to claim 29, after the receiving release indication information sent by the terminal, further comprising at least one of the following:
sending an RRC release message to the terminal according to the release indication information; and
releasing the terminal to an RRC idle state or an RRC inactive state indicated in the release indication information.

31. A busy indication transmission apparatus, comprising:
a determining module, configured to: determine whether to send a busy indication to a network side after listening to a paging message; and
a first sending module, configured to: if determining to send the busy indication to the network side, send the busy indication to the network side.

32. The apparatus according to claim 31, wherein the busy indication is used to indicate that a terminal does not accept paging or rejects paging.

33. The apparatus according to claim 31 or 32, wherein the busy indication comprises at least one of the following: a radio resource control RRC layer busy indication and a non-access stratum NAS busy indication.

34. The apparatus according to any one of claims 31 to 33, wherein the determining module is configured to send, according to an RRC state when the terminal receives the paging message, a busy indication to the network side.

35. The apparatus according to any one of claims 31 to 33, wherein
the determining module is configured to: in a case that at least one of a first condition, a second condition, and a third condition is met, determine to send the busy indication to the network side, wherein
the first condition comprises at least one of the following:
that the paging message is sent by a network side of one card of the terminal, and a service priority corresponding to the paging message is lower than or equal to a service priority that is being executed or to be executed by the terminal on another card;
that the paging message is sent by a network side of one card of the terminal, and another card of the terminal is executing or is about to execute a preset service;
that before listening to the paging message, the terminal does not send leave indication information to the network side, wherein the leave indication information is used to indicate that the terminal cannot send or receive data on the network side; and
that before listening to the paging message, the terminal does not send the busy indication to the network side;
the second condition comprises at least one of the following:
that an anchor base station or a last serving base station is capable of receiving or processing an RRC layer busy indication or requires the terminal to send an RRC layer busy indication;
that the anchor base station or the last serving base station supports sending of a paging cause; and
that the anchor base station or the last serving base station supports a function or a feature related to a multi-card terminal; and
the third condition comprises at least one of the following:
that a core network is capable of receiving or processing a NAS busy indication or requires the terminal to send a NAS busy indication;
that the core network supports sending of a paging cause; and
that the core network supports a function or a feature related to a multi-card terminal.

36. The apparatus according to any one of claims 31 to 35, further comprising at least one of the following:
a first receiving module, configured to receive first indication information through a broadcast message or dedicated signaling, wherein the first indication information is used to indicate whether an anchor base station or a last serving base station is capable of receiving or processing an RRC layer busy indication or requires the terminal to send an RRC layer busy indication;
a second receiving module, configured to receive second indication information through a broadcast message or dedicated signaling, wherein the second indication information is used to indicate whether a core network is capable of receiving or processing a NAS busy indication or requires the terminal to send a NAS busy indication;
a third receiving module, configured to receive third indication information through a broadcast message or dedicated signaling, wherein the third indication information is used to indicate whether an anchor base station or a last serving base station supports sending of a paging cause;
a fourth receiving module, configured to receive fourth indication information through a broadcast message or dedicated signaling, wherein the fourth indication information is used to indicate whether a core network supports sending of a paging cause;
a fifth receiving module, configured to receive fifth indication information through a broadcast message or dedicated signaling, wherein the fifth indication information is used to indicate whether an anchor base station or a last serving base station supports a function or a feature related to a multi-card terminal;
a sixth receiving module, configured to receive sixth indication information through a broadcast message or dedicated signaling, wherein the sixth indication information is used to indicate whether a core network supports a function or a feature related to a multi-card terminal; and
a second sending module, configured to send seventh indication information to the network side, wherein the seventh indication information is used to indicate whether the terminal supports sending of the busy indication.

37. The apparatus according to claim 35, wherein
the determining module is configured to: in a case that the second condition and the third condition are met or the first condition, the second condition, and the third condition are met, determine to send the RRC layer busy indication or to send, according to an RRC state when the terminal receives the paging message, the busy indication;
in a case that the third condition is not met and the second condition is met, or the third condition is not met and the first condition and the second condition are met, determine to send the RRC layer busy indication; and
in a case that the second condition is not met and the third condition is met, or the second condition is not met and the first condition and the third condition are met, determine to send the NAS busy indication.

38. The apparatus according to claim 35, wherein
the determining module is configured to: in a case that the second condition is not met and the third condition is met, or the second condition is not met and the first condition and the third condition are met, determine not to send the busy indication; and
in a case that the second condition is not met and the third condition is not met, determining not to send the busy indication.

39. The apparatus according to claim 34 or 37, wherein
the determining module is configured to: if the terminal is in an RRC inactive state, send the RRC layer busy indication; and if the terminal is in an RRC idle state, send the NAS busy indication.

40. The apparatus according to any one of claims 31 to 39, wherein the busy indication is carried in one of the following messages: an RRC connection resume request message, an RRC connection resume complete message, an RRC connection establishment request message, an RRC connection establishment complete message, a security mode command SMC complete message, and a NAS message.

41. The apparatus according to any one of claims 31 to 40, wherein the busy indication is further used to indicate the network side to release the terminal to a first RRC state, and the first RRC state is an RRC idle state or an RRC inactive state.

42. The apparatus according to claim 36, further comprising:
a first determining module, configured to determine, by the terminal, a paging cause of the paging message according to the third indication information and/or the fourth indication information.

43. The apparatus according to any one of claims 31 to 42, further comprising at least one of the following:
a third sending module, configured to send release indication information to the network side, wherein the release indication information is used to indicate the network side to release the terminal; and
a fourth sending module, configured to indicate second timer duration to the network side, wherein the second timer duration is used to indicate duration in which the terminal is busy or cannot receive a paging message.

44. The apparatus according to claim 43, wherein the release indication information and/or the second timer duration are carried in one of the following messages: an RRC connection resume request message, an RRC connection resume complete message, an RRC connection establishment request message, an RRC connection establishment complete message, a security mode command SMC complete message, and a NAS message.

45. The apparatus according to any one of claims 31 to 44, further comprising at least one of the following:
a first processing module, configured to: after sending the busy indication to the network side, if no RRC release message is received, enter, by the terminal, an RRC idle state;
a second processing module, configured to: if a T319 timer expires, enter, by the terminal, an RRC idle state; and
a third processing module, configured to start a first timer, wherein the first timer is used to indicate waiting duration of receiving an RRC release message by the terminal.

46. The apparatus according to claim 45, further comprising at least one of the following:
a fourth processing module, configured to: if an RRC release message is received, stop the first timer; and
a fifth processing module, configured to: if the first timer expires, release the terminal to a first RRC state, wherein the first RRC state is an RRC idle state or an RRC inactive state.

47. The apparatus according to claim 46, further comprising:
a fifth sending module, configured to send first timer duration and/or the first RRC state to the network side when the busy indication is sent or before the busy indication is sent.

48. The apparatus according to claim 37, wherein an RRC layer reports the busy indication or a paging cause in the paging message to an upper layer.

49. The apparatus according to claim 48, further comprising: a sixth processing module, configured to: after the RRC layer reports the busy indication or the paging cause in the paging message to the upper layer, enter, by the terminal, an RRC idle state.

50. The apparatus according to claim 45, 46, 47, or 49, further comprising: a seventh processing module, configured to: after the terminal enters the RRC idle state, set a release cause.

51. The apparatus according to claim 50, wherein the release cause comprises at least one of the following: an RRC connection failure, an RRC connection resume failure, a busy indication failure, and a first cause.

52. The apparatus according to any one of claims 31 to 51, wherein an eighth processing module is configured to: if a random access channel failure occurs when the busy indication is sent to the network side, stop sending the busy indication.

53. A busy indication transmission apparatus, comprising:
a first receiving module, configured to receive a busy indication sent by a terminal; and
a processing module, configured to perform a corresponding operation according to the busy indication.

54. The apparatus according to claim 53, wherein the busy indication comprises at least one of the following: an RRC layer busy indication and a NAS busy indication.

55. The apparatus according to claim 54, wherein the busy indication comprises an RRC layer busy indication; and the processing module is configured to perform a first operation according to the busy indication, wherein the first operation comprises at least one of the following:
stopping or no longer initiating paging related to the terminal; and
discarding or blocking or caching arrived downlink data or signaling.

56. The apparatus according to claim 55, wherein the processing module is configured to start a second timer after receiving the RRC layer busy indication;
perform the first operation during running of the second timer;
if an uplink message sent by the terminal is received, stop the second timer; and
if the second timer expires, stop the first operation.

57. The apparatus according to claim 54, wherein the busy indication comprises a NAS busy indication; and the processing module is configured to perform a second operation according to the busy indication, wherein the second operation comprises at least one of the following:
sending the busy indication to an anchor base station or a last serving base station of the terminal;
stopping sending downlink data or signaling to the anchor base station or the last serving base station of the terminal;
stopping or no longer initiating paging related to the terminal; and
discarding or blocking or caching arrived downlink data or signaling.

58. The apparatus according to claim 57, wherein the processing module is configured to start a second timer after receiving the NAS busy indication;
perform the second operation during running of the second timer;
if an uplink message sent by the terminal is received, stop the second timer; and
if the second timer expires, stop the second operation.

59. The apparatus according to any one of claims 53 to 58, further comprising:
an indication information receiving module, configured to receive release indication information sent by the terminal, wherein the release indication information is used to indicate a network side to release the terminal.

60. The apparatus according to claim 59, wherein
the indication information receiving module is configured to send an RRC release message to the terminal according to the release indication information; and
release the terminal to an RRC idle state or an RRC inactive state indicated in the release indication information.

61. A terminal, comprising a processor, a memory, and a program or instructions stored in the memory and executable on the processor, wherein when the program or instructions are executed by the processor, steps of the busy indication transmission method according to any one of claims 1 to 22 are implemented.

62. A network side device, comprising a processor, a memory, and a program or instructions stored in the memory and executable on the processor, wherein when the program or instructions are executed by the processor, steps of the busy indication transmission method according to any one of claims 23 to 30 are implemented.

63. A readable storage medium, storing a program or instructions, wherein when the program or instructions are executed by a processor, steps of the busy indication transmission method according to any one of claims 1 to 22 are implemented, or steps of the busy indication transmission method according to any one of claims 23 to 30 are implemented.

64. A chip, comprising a processor and a communication interface, wherein the communication interface is coupled to the processor, and the processor is configured to execute a program or instructions to implement steps of the busy indication transmission method according to any one of claims 1 to 22, or implement steps of the busy indication transmission method according to any one of claims 23 to 30.

65. A computer program product, wherein the computer program product is stored in a non-volatile storage medium, and the computer program product is executed by at least one processor to implement steps of the busy indication transmission method according to any one of claims 1 to 22 or to implement steps of the busy indication transmission method according to any one of claims 23 to 30.
